Europäisches Patentamt

European Patent Office

Office européen des brevets

(11) Publication number: **0 273 681**
**A2**

## EUROPEAN PATENT APPLICATION

(21) Application number: **87311294.0**

(22) Date of filing: **22.12.87**

(51) Int. Cl.⁴ **B29C 47/00**

(30) Priority: **02.01.87 US 16**

(43) Date of publication of application:
**06.07.88 Bulletin 88/27**

(84) Designated Contracting States:
**AT BE CH DE ES FR GB GR IT LI LU NL SE**

(71) Applicant: **MOBIL OIL CORPORATION**
**150 East 42nd Street**
**New York New York 10017(US)**

(72) Inventor: **Su, Tien-Kuei**
**7 Adams Drive**
**Belle Mead New Jersey 08502(US)**
Inventor: **Kwack, Tae Hoon**
**19 Whitebrook Rise**
**Fairport New York 14450(US)**
Inventor: **Sharps, Gordon Vincent, Jr.**
**106 Grand View Drive**
**Fairport New York 14450(US)**
Inventor: **Canterino, Peter John**
**39 Mary Drive**
**Towaco New Jersey 07082(US)**

(74) Representative: **Colmer, Stephen Gary**
**Patent Department c/o Mobil Services**
**Company Limited Mobil Court 3 Clements**
**Inn**
**London WC2A 2EB(GB)**

(54) Method for making turbid and pearlescent polymer films from incompatible polymer mixtures.

(57) A method of making turbid polymeric films from a mixture of incompatible polymeric materials is disclosed. The method comprises feeding the mixture which comprises a continuous phase of a first polymeric material and a dispersed phase of a second polymeric material to an annular flow passageway in an extrusion die; subjecting the mixture to shear forces transverse to the direction of flow; and extruding the mixture through the die lips to form a turbid film. The dispersed phase polymer has a melting point and glass transition temperature higher than that of the continuous phase material. A silvery pearlescent film is obtained when the turbid film is oriented in the machine and/or transverse direction.

# METHOD FOR MAKING TURBIX AND PEARLESCENT POLYMER FILMS FROM INCOMPATIBLE POLYMER MIXTURES

This invention relates to a method for making turbid films from a mixture of thermoplastic polymers and more specifically, to a method of making turbid films from a mixture of thermoplastic polymers which are incompatible.

Many different kinds of shaped articles such as films, filaments, sheets, containers and tubing may be made from polymers and polymeric compositions. In many cases, the shaped articles are required to have specific properties to meet end use requirements.. Thus, it has often been necessary to develop special mixtures or blends of various resins to satisfy such requirements. For instance, in packaging, it may be desirable to keep the contents from view which will require the use of an opaque or turbid polymeric film.

The turbidity of polymeric films depends on absorption and scattering of light by a different phase dispersed in a continuous polymeric medium. The inclusion of a different phase can be attributed to impurities, fillers, voids or polymeric crystals having a different index of refraction from that of the continuous medium. The scattering intensity (turbidity) is related to the size of the dispersed phase and the refractive index difference between the continuous and dispersed phases.

U.S. Patent No. 4,303,708 describes the use of unmelted three dimensional inorganic particles of crosslinked polymeric material as a second phase dispersed in a continuous phase of a polymer or copolymer of an alpha-olefin. The film can be oriented by biaxial stretching.

U.S. Patent No. 4,377,616 assigned to Mobil Oil Corporation discloses an opaque, biaxially oriented polymeric film having a lustrous satis appearance. Spherical, solid particles incompatible with the matrix material are dispersed therein and extruded using conventional coat hanger die to form a film which is biaxially stretched to yield the satin appearance.

Khaineman et al, Plast. Massy 11 40 (1984) teaches the use of deformable thermoplastic material as the dispersed phase. However, stretching in the transverse direction only is used to produce silvery films.

It has also been known to provide films having improved gas permeation properties by subjecting a polymeric mixture comprising a dispersed phase, a continuous phase and a compatibilizer to extrusion through a rotary die. See commonly assigned U.S. application serial number 694,727, filed January 24, 1985.

This invention provides a method of making turbid polymeric films comprising feeding to an annular flow passageway in an extrusion die a polymeric mixture comprising first and second incompatible thermoplastic polymers, the first polymer forming a continuous phase and the second polymer, a dispersed phase, the second polymer having a higher melting point and a higher glass transition temperature than the first polymer; subjecting the polymeric mixture to shear forces transverse to the direction of flow; and extruding through the die to form a turbid film.

This invention further provides a method of making pearlescent polymeric films comprising the method described above and including the additional step of stretching or orienting the turbid film in one, two or more directions including the steps of uniaxial, biaxial and multiaxial stretching to yield a pearlescent or silvery film.

Figure 1 is a partly-sectioned elevation of a tubular extrusion die which may be used to extrude the polymer blends.

Figure 2 is a section of the die of Figure 1 along line 2-2.

According to the present invention, a first polymeric material is mixed with a second polymeric material incompatible with the first material. By incompatible, it is meant that the two materials, in their molten state when mixed form two distinct phases. The amount of the materials used are such that the first material forms the continuous phase (matrix) and the second material forms the dispersed phase in a molten state.

The thermoplastic polymer which makes up the continuous matrix of the blend is the one which will determine many of the properties of the final article even though these properties may be modified by the presence of the other component, namely, the dispersed phase. Generally, continuous phase or matrix will be a polyolefin such as polyethylene, polypropylene, polybutylene, or a copolymer of these materials. Homogeneous blends of these homopolymers and copolymers may also be employed where desired. A particularly preferred component for the matrix is polyethylene, and this may be high density polyethylene produced either by the low pressure or medium pressure polymerization processes or a low density polyethylene, i.e., a polyethylene having a density up to about 0.935gm/cc. A particularly preferred class of low density polyethylenes is the linear, low density polyethylenes produced by the copolymerization of ethylene with a minor amount, typically 5 to 20 percent by weight, of a $C_4$ to $C_{12}$ alpha olefin comonomer such as butene, hexene, 4-methyl-pentene-1, octene or decene in the presence of a stereospecific polymerization catalyst. Various polyethylenes of this type are commercially available.

The dispersed component of the mixture is selected in order to provide the desired properties in the mixture. Thus, it will frequently be chosen in order to provide vapor barrier properties so that the extruded articles have improved resistance to water vapor, carbon dioxide or other gases. Other properties which may be varied by the inclusion of the flow segregated component are strength, stiffness, optical characteristics and tear resistance. A wide variety of polymers are known which will confer these and other desired characteristics on the blend and provided that the polymer will form the desired heterogeneous blends which are desired. The dispersed component may typically be a polyester such as polyethylene terephthalate, polybutylene terephthalate, a polycarbonate, a polyamide or copolyamide, or polystyrene.

Polyamides and copolyamides are well known and are made by reacting carboxylic acids with primary amines under well-known conditions. Examples of carboxylic acids used in polyamide preparation are adipic acid, saberic acid, sebacic acid, azelaic acid, malonic acid, glutaric acid and pimelic acid. Examples of primary amines are tetramethylene diamine, pentamethylene diamine, hexamethylene diamine and octamethylene diamine. Exemplary polyamides include polypentamethylene adipamide, polyhexamethylene adipamide, polyhexamethylene sebacamide, polyamides obtained from lactams such as caprolactams and from amino acids such as 11-aminoundecanoic acid.

Other thermoplastic resins which may be used in the present blends include polystyrenes both of the impact and crystal grades, and copolymers of various kinds, for example, ethylene/vinyl acetate copolymers, ethylene/vinyl alcohol copolymers, ethylene/acrylate copolymers, e.g., ethylene/acrylic ester copolymers, ethylene/methacrylic ester copolymers, ethylene/vinyl chloride copolymers and various other thermoplastic resins, e.g., polyacrylonitrile, which may be selected in order to provide the desired combination of properties in the final resin blend.

For the present invention, it is important that the dispersed phase polymeric material has a glass transition temperature and a melting point which are sufficiently higher than those of the continuous phase material so that the dispersed polymer is capable of remaining dispersed upon heating. It is not necessary that the dispersed material be in the shape of spherical particles, i.e., the dispersed polymeric material can be in any shape.

Compatibilizers which are normally used to stabilize the stratified structure of the blend are not used in the present invention. Thus, in a typical application of the present invention, only two polymers are utilized to form the mixture, one forming the continuous phase and the other, the dispersed phase.

The matrix polymer will generally constitute at least 50 weight percent of the total blend and more usually, at least 60, preferably at least 70, weight percent of the total blend. The amount of the dispersed phase will be determined by the extent to which its charateristic properties are desired in the final blend and also by considerations of the overall strength of the article after extrusion. Generally, dispersed phase will not exceed 40 percent by weight of the blend and generally will be in the range of 10-30 weight percent of the blend. As mentioned above, no compatibilizer will be present in the total polymer composition.

Any of all of the blend components may be used to introduce inert fillers, dyes and other additives, e.g., antioxidants into the composition provided that this will not interfere with the formation of the desired flow segregrated structure in the final, extruded blend or with the desired properties of the composition. Opacifiers, colorants, lubricants, stabilizers and other additives may be used in their conventional amounts and added to the polymers in the normal way. The amount of filler is not included in the calculation of the amounts of the various polymers set out in this specification.

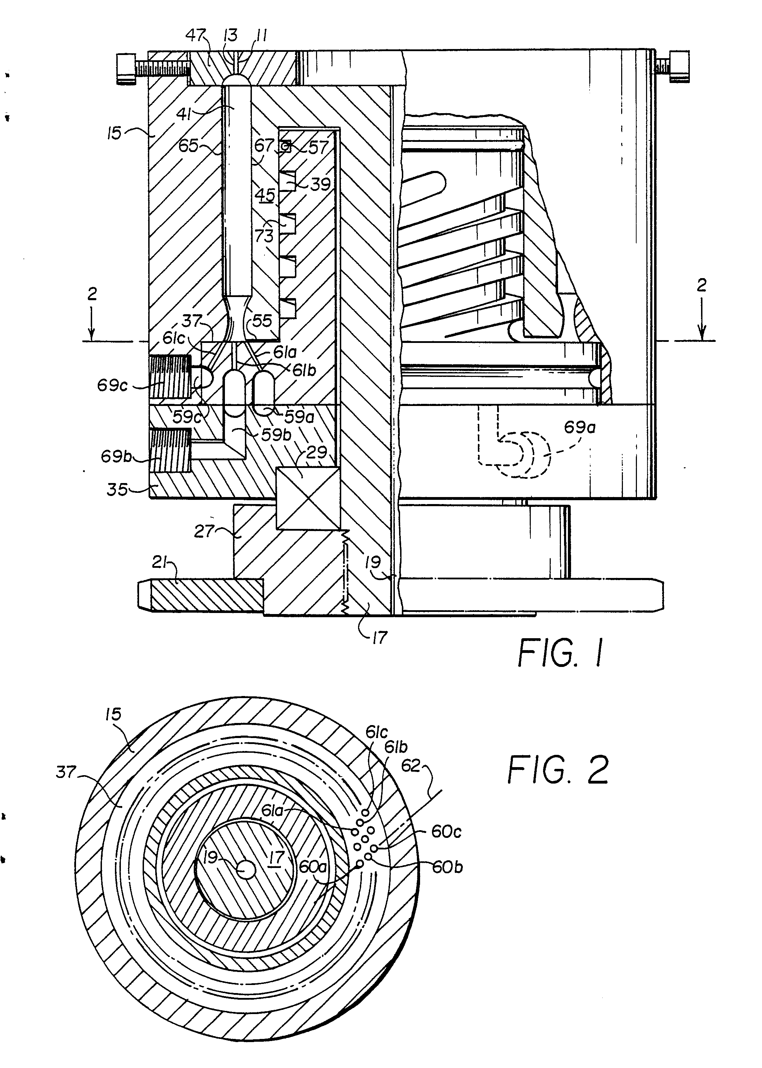

The polymers are extruded through a rotary, annular extrusion die shown in Figures 1 and 2 of the accompanying drawings.

The die includes an outer die body 15 having an interior peripheral surface 65 which defines the outer wall of an annular flow passage 41. The inner wall of annular flow passage 41 is formed by an outer peripheral surface 67 of a rotary hub 45. The annular flow passage 41 terminates at a die orifice formed by an outer die lip 13 and an inner die lip 11 provided at the terminal ends of the inner and outer walls respectively, on outer die body 15 and the rotary hub 45. When rotary hub 45 is rotated, die lip 13 and orifice adjustment ring 47 remain stationary. Thus, during extrusion, the inner wall of annular flow passage 41 will go in motion to impart shear forces transverse to the direction of flow of the polymer mixture. Outer die body 15 can be made rotatable, preferably in a direction opposite to rotary hub 45, to exert transverse shear on both surface of the polymer mixture. In this case, both die lips 11 and 13 will go into rotation.

The components of the thermoplastic polymer blend are introduced into the annular flow passage 41 by three annular melt inlet passages 59a, 59b and 59c. These annular melt inlet passages are formed in a distribution plate 35 and a melt seal/distribution block 37 and are respectively connected to melt inlet orifices 69a, 69b and 69c which are connected to resin extruders (not shown). Distribution plate 35 is fixed to the melt seal/distribution plate 37.

The polymer melts flow into the annular melt inlet pasages 59a, 59b and 59c through respective concentric rings of holes 61a, 61b and 61c provided in the melt seal distribution block 37. These holes which are equally spaced in each group, are shown in greater detail in Fig. 2. Each ring of holes, e.g., 61a, is on a fixed common radius from the die axis, with three rings 61a, 61b and 61c, each being on a different radius, as shown in Fig. 2. In addition, the holes of one ring are shifted, in a circumferential direction, i.e., radially offset, relative to the holes of the ring next to it. The holes are preferably arranged so that holes in the rings will align, e.g., on line 62, as illustrated in Fig. 2.

The rotary hub 45 of the die is formed with a hollow drive shaft 17 which is journalled on bearing 29 in distribution plate 35 to provide thrust support and radial location for shaft 17. Gas passage 19 through the center of shaft 17 is used to inflate the blown film bubble which is extruded through the die. A bearing retainer 27 is screwed onto shaft 17 to locate bearing 29, and sprocket 21 which is attached to drive shaft 17 so that the shaft and hub 45 may be rotated by means of a suitable driving source (not shown) coupled to the sprocket by means of a driving chain.

The melt seal/distribution block 37 has a cylindrical upper portion which has on its outer circumferential periphery a screw thread 39 forming the flight channels of an extruder-type seal. The other part of the extruder type seal is formed by the inner peripheral wall 73 of the rotary hub 45. The screw threads 39 and wall 73 are arranged such that as rotary hub 45 rotates it forces any polymer melt tending to escape from the annular flow passage 41 through gap 55 between the bottom of rotary hub 45 and top of melt seal/distribution block 37 back into the annular flow passage. This extruder-type seal is highly effective in preventing loss of polymer melt even when it is under high pressure.

A die orifice adjustment ring 47 is provided which is fixed to the outer die body 15 and is adjustable in position to set the die gap between the inner die lip 11 and outer die lip 13 around the entire die orifice.

When used for producing the polymeric mixtures of the present invention, the molten polymers making up the mixture are fed into the extrusion die through inlets 69a, 69b and 69c. The dispersed phase may be fed in through any of the inlets since it becomes dispersed through the continuous phase as the polymer melts pass up through the annular flow passageway 41 where they are subjected to the transverse shear forces by the relative movements of the die walls 65, 67. Depending upon whether the die hub is rotated or not and depending upon the speed of rotation, the dispersed phase will be distributed differently in the final extrudate. If the rotary hub is not rotated, a film with layers of the polymers obliquely oriented with respect to the inner and outer surfaces of the film wall may be formed. If die hub 45 is rotated, the flow conditions within annular flow passage 45 will tend to produce a product which has a number of layers of the different polymers, with the interface between the layers approximately parrallel to the surface of the film. However, when the polymers do not form a homogeneous blend and one is used in a relatively large amount compared to the other, the polymer which is present in the smaller amount will form a dispersed phase which, being immiscible with the other phase, forms a flow segregated component which, under the influence of the transverse shear forces in the die, becomes distributed throughout the matrix of the other polymer in the form of thin, parallel and overlapping layers embedded in the continuous phase. It is the overlapping layers of the dispersed phase which confer the desired properties on the extruded article, e.g., vapor barrier and turbidity properties, while still retaining the desirable properties of the continuous phase matrix polymer.

Layered products may be produced by feeding the components of the flow segregated system, i.e., matrix polymer and dispersed polymer, into one or two of the polymer inlets, with a different polymer or polymers being fed into the remaining inlets. This will produce a layered product in which one or more of the layers comprise a flow segregated system of matrix polymer and dispersed polymer with the other layers being of a more conventional, homogenous type. The shear forces in the die have been found to be sufficient to achieve the requisite distribution of the dispersed phase in the matrix polymer even though these components do not themselves come into contact with the walls of the die. Particularly useful products of this kind may be formed using a central layer of a flow segregated system, e.g., of a polyamide dispersed in a polyolefin for improved strength or vapor barrier properties, with outer layers of polyolefin, e.g., LLDPE.

In addition to its ability to uniformly distribute a plurality of melt streams, the die has the capability of imparting a transverse direction (TD) orientation of the polymer molecules during the extrusion process, thus improving the orientation balance of the extruded product, i.e., the ratio of transverse direction (TD) to longitudinal or machine direction (MD) orientation. When rotation is employed, the extruded film has improved TD/MD orientation balance, thereby reducing the required blow up ratio (BUR) to attain a particular desired transverse milecular orientation.

The die produces a turbid annular extrudate which will normally be formed into a blown film by the application of gas pressure to the interior of the hollow extrudate, in the conventional manner. To provide a pearlescent or silvery film, the extrudate is subjected to orientation in the machine direction (MD), transverse direction (TD) or both, five to up to eight times its original dimension at a temperature below the glass transition or melting tempera ture of the dispersed phase. This represents a particular feature of films obtained through the rotary die. For non-rotary dies, films must be oriented in the transverse direction only in order to produce a silvery film.

The following non-limiting examples further illustrate the subject invention. The properties of the incompatible polymeric materials used are summarized in Table 1.

## TABLE 1

| Resin | Trade Name | Manufacturer | Melt Index* | Density g/cc** |
|---|---|---|---|---|
| Linear low density poly-ethylene | MLA-043 | Mobil Chemical Corp. | 2.0 | 0.918 |
| Polystyrene | PS-1240 | Mobil Chemical Corp. | 9.0 | 1.050 |

\* measured by ASTM 1238
\*\* measured by ASTM 01505

## EXAMPLE 1

A mixture of 95% wt. MLA-043 linear low density polyethylene and 5 wt. % polystyrene was fed through a rotary extrusion die as shown in Figures 1 and 2. A 229mm (9 inch) diameter die was used. Four runs were made to form blown films and the results are summarized in Table 2. Haze values were measured by using a Gardner 4x-10 hazemeter.

## TABLE 2

| Run No. | Film Thickness mm ($1x10^{-3}$ inch) | Rotary Speed (RPM) | Haze % |
|---|---|---|---|
| 1-1 | 0.035 (1.4) | 0 | 15 |
| 1-2 | 0.035 (1.4) | 2 | 22 |
| 1-3 | 0.035 (1.4) | 8 | 37 |
| 1-4 | 0.035 (1.4) | 12 | 38 |

EXAMPLE 2

Example 1 was repeated with the exception that the polymer mixture comprised 75 wt. % linear low density polyethylene and 25 wt. % polystyrene. The results are shown in Table 3.

## TABLE 3

| Run No. | Film Thickness mm (1x10$^{-3}$ inch) | Rotary Speed (RPM) | Haze % |
|---------|-----------------|-----------------|--------|
| 2-1 | 0.035 (1.4) | 0 | 32 |
| 2-2 | 0.035 (1.4) | 2 | 57 |
| 2-3 | 0.035 (1.4) | 8 | 78 |
| 2-4 | 0.035 (1.4) | 12 | 81 |

The results in Tables 2 and 3 indicate that the turbidity in the product films can be increased substantially by using a rotary die.

## Claims

1. A method of making turbid polymer films comprising feeding to an annular flow passageway in an extrusion die a polymeric mixture comprising first and second imcompatible thermoplastic polymers, the first polymer forming a continuous phase and the second polymer, a dispersed phase, subjecting the polymeric mixture to shear forces transverse to the direction of the flow and extruding through the die to form a turbid film, characterized in that the polymeric mixture contains no compatilizer and that the second polymer has a higher melting point and a higher glass transition temperature than the first polymer.

2. The method of claim 1 wherein the transverse shear forces are induced by the rotation of at least one of the walls of the annular flow passageway.

3. The method of claim 1 wherein the transverse shear forces are induced by rotating both walls of the walls of the annular flow passageway, the walls rotating in opposite directions.

4. The method of claim 1 wherein the first polymer is a polyolefin or a copolymer thereof.

5. The method of claim 4 wherein the polyolefin is polyethylene, poypropylene or polybutylene.

6. The method of claim 4 wherein the copolymer comprises the polyolefin and an alpha olefin having 4 to 12 carbon atoms.

7. The method of claim 1 wherein the first polymer comprises linear low density polyethylene.

8. The method of claim 1 wherein the second polymer is a polyamide, a copolyamide, a polyester, a polycarbonate, polystyrene, or polyacrylonitrile.

9. The method of claim 1 wherein the first polymer is linear low density polyethylene and the second polymer is polystyrene or polyamide.

10. A method of making pearlescent polymeric films comprising stretching the turbid film of any of the preceding claims in at least one direction to form a pearlescent film.

11. A turbid polymeric film formed in accordance with any one of claims 1 to 9.

12. A pearlescent polymeric film formed in accordance with claim 10.

FIG. 1

FIG. 2